# EUROPEAN PATENT SPECIFICATION

(11) **EP 0 454 688 B1**
(45) Date of publication and mention of the grant of the patent: **02.11.1994**
(21) Application number: 90900550.6
(22) Date of filing: 07.12.1989
(51) Int. Cl.: C01B 31/34

(54) **PROCESS FOR PRODUCING TUNGSTEN MONOCARBIDE**
VERFAHREN ZUR HERSTELLUNG VON WOLFRAMMONOKARBID
PROCEDE DE FABRICATION DE MONOCARBURE DE TUNGSTENE

(30) Priority: 23.01.1989 US 299298
(43) Date of publication of application: 06.11.1991
(73) Proprietor: KENNAMETAL INC., Latrobe, PA 15650 (US)
(72) Inventor: TERRY, Charles, J., Fallon, NV 89406-9201 (US); NEWMAN, Harold, C., Fallon, NV 89406-9450 (US)
(74) Representative: Bunke, Holger, Dr.rer.nat. Dipl.-Chem.
(86) International application number: US8905515
(87) International publication number: WO9008103

(56) References cited:
- US-A- 1 255 144
- US-A- 3 373 097
- US-A- 3 692 479
- US-A- 3 743 499
- US-A- 3 914 113
- US-A- 4 190 439
- US-A- 4 256 496
- US-A- 4 402 737
- US-A- 4 489 044
- US-A- 4 834 963
- US-E-32 612
- TMS Paper Selection A84-48, Undated, The Metallurgical society of Aime, (Warrendale, PA, USA), Gomes et al. Preparation of Tungstem carbide by gas sparging Tungstate melts. See pages 3 and 7

## Description

### BACKGROUND OF THE INVENTION

This invention relates to a process for producing tungsten monocarbide (WC) and more particularly to a process involving reacting a molten composition comprising an alkali metal halide and an oxygen compound of tungsten with solid carbonaceous reactants.

U. S. Patent No. 4,489,044 (Gomes et al.) which corresponds to U.S Re-issue Patent Re-32,612 discloses a method of producing tungsten monocarbide. A melt containing an alkali metal halide and an oxygen compound of tungsten is sparged with a gaseous hydrocarbon, particularly methane. The preferred alkali metal halide is sodium chloride, but the alkali metal halide may also consist of fluorides or bromides of sodium, potassium or lithium. Additionally mixed metal compounds such as NaAlF or KAlF may also be used. The oxygen compound of tungsten is wolframite, (Fe, Mn) WO₄, or scheelite, CaWO₄. The gaseous hydrocarbon is preferably methane in the form of natural gas, but other gaseous hydrocarbons can also be used such as ethane, acetylene, propane, or butane as well as mixtures of the hydrocarbon gas or gases with H₂ or CO. The Gomes et al. patent discloses that reactants such as powdered charcoal, coke breeze or calcium carbide may be added to the sodium chloride melt to facilitate reduction during sparging. Finally, the patent teaches that reduction and crystal growth may be assisted by the addition of small amounts of alkali metal borates, carbonates, fluorides, or hydroxides.

The sparging is carried out in a conventional refractory crucible made from materials such as graphite or ceramics such as alumina, magnesia, zircon, or silicon carbide. Refractory metal alloys such as Inconel are particularly effective. The sparging takes place at a temperature between about 900° to 1100°C. The flow rate of the gaseous hydrocarbon is between about 4 to 12 liters per minute per liter of melt for a period of about 3 to 8 hours.

The tungsten monocarbide produced by the method disclosed in the Gomes et al. patent has a microstructure in the form of platelets and twinned crystals. The crystals exhibit no major growth along the Z-axis. This morphology results in tungsten monocarbide that is not the norm of the cemented carbide industry and the crystals lack the strength necessary to make acceptable cemented carbide products.

The tungsten monocarbide produced by the Gomes et al. method also results in the carbon content being in the range of generally 6.08 - 6.10% by weight of the total WC. The correct stoichiometric amount of carbon in WC is 6.13% by weight. Thus, the Gomes et al. method results in WC that is under-carburized and subsequent processing is required to increase the carbon content before the WC can be commercially utilized. The grain size of the WC produced by the Gomes et al. method is quite small, with more than 50% of the grains being smaller than 15 micrometers in average diameter.

It is an object of the present invention to produce tungsten monocarbide having a preferred crystal morphology. The crystals produced by the process of the present invention show greater growth along the Z-axis, thus producing more blocky or thick bladed, and some equant, forms.

It is a further object of the present invention to produce crystals of tungsten monocarbide that contain carbon in the stoichiometrically correct ratio of 6.13% carbon by weight directly from a melt of an alkali metal halide and an oxygen compound of tungsten.

It is a feature of the present invention that tungsten monocarbide is produced from a melt of an alkali metal halide and an oxygen compound of tungsten by the addition of solid carbonaceous material and without the use of sparging.

It is an advantage of the present invention that tungsten monocarbide is produced having a large percentage of relatively coarse crystals that is acceptable for making sintered or cemented carbide products. The product also has application beyond cutting tools and wear parts, such as in hard facing welding rods and diamond bonding matrix powders.

Solid carbonaceous reactants are mixed with an alkali metal halide and an oxygen compound of tungsten. This mixture is heated until the composition becomes molten to produce tungsten monocarbide. Solid carbonaceous reactants such as natural flake graphite or carbon black or solid hydrocarbons such as table sugar yield tungsten monocarbide in a relatively short period of time without the need for sparging the melt with a hydrocarbon gas.

The starting source for tungsten is any of the conventional tungsten oxide concentrates such as wolframite or scheelite. The tungsten oxide concentrate is blended with an alkali metal halide and an alkali metal silicate. The alkali metal halide can be any of the chlorides, fluorides, or bromides of sodium, potassium, or lithium. Also mixed metal compounds of these materials may be used, such as NaAlF or KAlF. The preferred alkali metal silicate is sodium meta-silicate which permits the proper melting temperature to be achieved.

The blended compound is melted in preferably a graphite crucible. Other refractory crucibles may be used, but metallic crucibles containing chromium should be avoided because chromium may contaminate the molten bath and form chromium oxide. Chromium oxide is difficult to separate from tungsten monocarbide crystals.

In the melt, the silicate combines with the Fe, Mn, Ca, and other impurities to form a slag which sinks down to the bottom of the crucible. The halide salt phase containing the tungsten values has a lower specific gravity than the slag and therefore floats on top of the slag. This process for converting the tungsten oxide to a tungsten halide is conventional and is described in U. S. Patent No. 3,373,097.

The halide salt phase containing the tungsten values is poured off the slag and then cooled to a solid material. The solid material is subsequently ground with powder and then blended with the solid carbonaceous reactants.

Natural flake graphite is the preferred solid carbonaceous reactant. The particle size of the natural flake graphite is important with the preferable size being generally larger than 75 micrometers and most preferably generally larger than 300 micrometers. Carbon black, HPN-200 graphite, or table sugar can also be used. HPN-200 graphite is a high purity, natural flake graphite that is sold by Dixon Graphite Co. in Lakehurst, New Jersey.

The mixture of the halide salt containing the tungsten values and the carbonaceous reactant is heated to a temperature in a range of approximately 900° to 1100°C at ambient pressure. Temperatures in excess of generally 1100°C should not be used to avoid fuming of the halide salts. The melt is maintained at this elevated temperature for at least one hour or longer to allow the reaction to be completed. The tungsten reacts with the carbonaceous reactant to form tungsten monocarbide which deposits on the bottom of the crucible. Once the reaction is complete, the halide salt is poured out of the crucible and the tungsten monocarbide can be recovered from the crucible. After being permitted to cool, the tungsten monocarbide crystals are then removed from the remaining reaction products and any unreacted materials. The tungsten monocarbide is cleaned by leaching with a hydrochloric acid solution. The resulting product is also treated with a conventional gravity separation process to remove any free carbon remaining from the carbonaceous reactant that may be present.

The invention will be more specifically illustrated by the following example:

### EXAMPLE

A mixture was prepared of 3.90 kilograms of Wolframite, 5.55 kilograms of sodium chloride and 5.55 kilograms of sodium meta-silicate. This mixture was heated for one hour at 1090°C and a tungsten bearing halide phase was formed as described in U. S. Patent No. 3,373,097. The tungsten bearing halide phase was decanted from a slag layer containing the remaining impurities and approximately 8.10 kilograms of the tungsten bearing halide was obtained. This material was allowed to cool and then pulverized.

Approximately 7,300 grams of the pulverized (-40 mesh) tungsten bearing halide was mixed with 453.3 grams of natural flake graphite and placed into a crucible made of nickel base alloy 214. The particle size distribution of the natural flake graphite used was as follows: 850 micrometers - 4.6%; 710 micrometers - 8.5%; 600 micrometers - 17.5%; 500 micrometers - 31.3%; 425 micrometers - 13.0%; 300 micrometers - 12.9% and -300 micrometers - 12.2%. The mixture was heated to 1070°C for three hours and 50 minutes during which time the ingredients became molten and tungsten monocarbide was formed. The resulting halide slag was decanted leaving the tungsten monocarbide crystals behind in the crucible. The WC crystals were removed from the crucible, allowed to cool and then cleaned. The cleaning step consisted of a leaching of the WC crystals with a hydrochloric acid solution to remove any residual salt and any metal impurities that the WC crystals may have picked up from the crucible. The WC crystals were then gravity separated to remove any free carbon and other insoluble materials. Following these cleaning steps, 209.7 grams of WC were obtained.

The tungsten monocarbide made by the method of the example was analyzed to determine the crystal morphology. The analysis determined that the crystals were generally blocky or thick bladed and many were in equant form. A chemical analysis determined that the carbon was present in the amount of 6.13% by weight, which is the correct stoichiometric amount of carbon in tungsten monocarbide. The tungsten monocarbide made by this process can be used directly in sintered or cemented carbide applications without the necessity of an additional carburizing step to bring the carbon content up to the correct stoichiometric amount.

Similar halide salt melts containing tungsten values were treated with other solid carbonaceous reactants such as carbon black, HPN-200 graphite, and sugar. Each of these carbonaceous reactants produced tungsten monocarbide directly from the melt with no need to sparge the melt with a hydrocarbon gas.

In each instance, an analysis was made of the crystal size of the resulting tungsten monocarbide. The results of these analyses are shown in the following tables.

**TABLE 1**

| Carbonaceous Reactant-Natural Flake Graphite | | |
|---|---|---|
| Sieve Designation (Micrometers) | (Standard U. S. Sieve Size) | % of Crystals Retained on Sieve |
| 106 | 140 | 15.0 |
| 90 | 170 | 12.0 |
| 53 | 270 | 27.0 |
| 45 | 325 | 8.0 |
| 38 | 400 | 11.0 |
| -38 | -400 | 19.0 |

**TABLE 2**

| Carbonaceous Reactant-Carbon Black | | |
|---|---|---|
| Sieve Designation (Micrometers) | (Standard U. S. Sieve Size) | % of Crystals Retained on Sieve |
| 45 | 325 | 9.5 |
| 38 | 400 | 6.0 |
| 30 | | 30.2 |
| 20 | | 35.6 |
| 15 | | 13.4 |
| 10 | | 4.8 |
| 5 | | 0.5 |
| -5 | | 0 |

**TABLE 3**

| Carbonaceous Reactants - HPN-200 Graphite | | |
|---|---|---|
| Sieve Designation (Micrometers) | (Standard U. S. Sieve Size) | % of Crystals Retained on Sieve |
| 38 | 400 | 4.0 |
| 30 | | 47.9 |
| 20 | | 37.2 |
| 15 | | 7.9 |
| 10 | | 2.6 |
| 5 | | 0.4 |
| -5 | | 0 |

**TABLE 4**

| Carbonaceous Reactant - Sugar | | |
|---|---|---|
| Sieve Designation (Micrometers) | (Standard U. S. Sieve Size) | % of Crystals Retained on Sieve |
| 45 | 325 | 7.0 |
| 38 | 400 | 1.0 |
| 30 | | 23.0 |
| 20 | | 25.5 |
| 15 | | 20.6 |
| 10 | | 12.0 |
| 5 | | 8.2 |
| -5 | | 2.7 |

An analysis was also made of the crystal size of the tungsten monocarbide made by the gas sparging method set out in the Gomes et al. patent.

**TABLE 5**

| Hydrocarbon Gas Sparging Method | | |
|---|---|---|
| Sieve Designation (Micrometers) | (Standard U. S. Sieve Size | % of Crystals Retained on Sieve |
| 45 | 325 | 3.0 |
| 38 | 400 | 1.0 |
| 30 | | 4.8 |
| 20 | | 13.1 |
| 15 | | 11.5 |
| 10 | | 28.9 |
| 5 | | 25.0 |
| -5 | | 12.7 |

A comparison of these tables reveals that the solid carbonaceous reactant process of the present invention yields crystal sizes much coarser than those obtained by the Gomes et al. gas sparging technique. In each instance, the addition of solid carbonaceous reactants without the use of gas sparging yields coarse crystal sizes, of which most are in excess of 15 micrometers. The use of natural flake graphite results in coarse crystal sizes in which 81% are larger than 38 micrometers.

The Gomes et al. method, on the other hand, produces crystal sizes in which approximately two-thirds of the crystals are smaller than 15 micrometers. Such fine tungsten monocarbide crystals have limited application in the cemented carbide industry.

While the invention has been illustrated with respect to several specific embodiments thereof, these embodiments should be considered as illustrative rather than limiting. Various modifications and additions may be made and will be apparent to those skilled in the art. For example, instead of mixing the carbonaceous reactants with the salt phase in its solid condition, the solid carbonaceous reactants can be added to the salt phase in its molten condition. This step can be done right after the molten salt phase is separated from the slag phase.

## Claims

1. A process for producing tungsten monocarbide comprising the steps of:
(a) mixing an alkali metal halide, an alkali metal silicate and a tungsten oxide concentrate to form a blend;
(b) melting said blend to form a halide salt phase containing tungsten values and a slag phase containing silicates and impurities;
(c) separating the salt phase from the slag phase;
(d) adding a carbonaceous reactant to said salt phase;
(e) reacting said carbonaceous reactant with the tungsten values in said salt phase to produce tungsten monocarbide crystals;
(f) removing said tungsten monocarbide crystals from the remaining reaction products and any unreacted material;
characterized in that solid carbonaceous material is added as said carbonaceous reactant without the use of sparging.

2. The process of claim 1, wherein the alkali metal halide is sodium chloride, the alkali metal silicate is sodium meta-silicate and the carbonaceous reactant is natural flake graphite.

3. The process of claim 1, wherein the carbonaceous reactant is added to the salt phase while the salt phase is in a molten condition.

4. The process of claim 1, wherein the carbonaceous reactant is added to the salt phase while the salt phase is in a solid condition.

5. The process of claim 1, wherein the tungsten monocarbide is formed as crystals which are generally larger than 15 micrometers.

6. A process for producing tungsten monocarbide comprising the steps of:
(a) mixing an alkali metal halide, an alkali metal silicate and a tungsten oxide concentrate to form a blend;
(b) melting said blend to form a halide salt phase containing tungsten values and a slag phase containing silicates and impurities;
(c) separating the salt phase from the slag phase;
characterized in that the process further comprises the steps of:
(d) adding natural flake graphite to said salt phase;
(e) reacting said natural flake graphite with the tungsten values in said salt phase to produce tungsten monocarbide crystals; and
(f) removing said tungsten monocarbide crystals from the remaining reaction products and any unreacted material.

7. The process of claim 1 or 6, wherein the alkali metal silicate is sodium meta-silicate.

8. The process of claim 1 or 6, wherein the tungsten oxide concentrate is selected from the group consisting of wolframite and scheelite.

9. The process of claim 6, wherein the alkali metal halide is sodium chloride and the alkali metal silicate is sodium meta-silicate.

10. The process of claim 6, wherein the natural flake graphite is added to the salt phase while the salt phase is in a molten condition.

11. The process of claim 6, wherein the natural flake graphite is added to the salt phase while the salt phase is in a solid condition.

12. The process of claim 6, wherein the tungsten monocarbide is formed as crystals which are generally larger than 38 micrometers.

13. A process of producing tungsten monocarbide comprising the steps of:
(a) mixing an alkali metal halide salt containing tungsten values with a solid carbonaceous reactant;
(b) reacting said carbonaceous reactant with said alkali metal halide salt without the use of sparging to produce tungsten monocarbide crystals having a size generally larger than 15 micrometers;
(c) removing said tungsten monocarbide crystals from the other reaction products and unreacted alkali metal halide salt and any unreacted carbon from said solid carbonaceous reactant.

14. The process of claim 1 or 13, wherein the carbonaceous reactant is selected from the group consisting of natural flake graphite, carbon black, high purity natural flake graphite and sugar.

15. The process of claim 13, wherein the alkali metal halide is sodium chloride and the carbonaceous reactant is natural flake graphite.

16. The process of claim 1 or 13, wherein the reacting of said carbonaceous reactant with the tungsten values occurs at a temperature of between 900°C and 1100°C.

17. The process of any one of claims 1, 6 or 13 further including the step of cleaning the tungsten monocarbide crystals to yield pure tungsten monocarbide.

18. The process of claim 13, wherein the carbonaceous reactant is added to the alkali metal halide salt containing tungsten values while the alkali metal halide salt is in a molten condition.

19. The process of claim 13, wherein the carbonaceous reactant is added to the to the alkali metal halide salt containing tungsten values while the alkali metal halide salt is in a solid condition.

20. The process of claim 1 or 13, wherein the particle size of the carbonaceous reactant is generally larger than 75 micrometers.

21. The process of claim 1 or 13, wherein the particle size of the carbonaceous reactant is generally larger than 300 micrometers.

22. The process of claim 1 or 13, wherein the carbonaceous reactant is natural flake graphite.

23. A process for producing tungsten monocarbide comprising the steps of:
(a) mixing an alkali metal halide salt containing tungsten values with natural flake graphite;
(b) reacting said natural flake graphite with said alkali metal halide salt to produce tungsten monocarbide crystals; and
(c) cleaning said tungsten monocarbide crystals.

24. The process of claim 23, wherein said tungsten monocarbide crystals have a size generally larger than 38 micrometers.

25. The process of any one of claims 1, 6, 13 or 23, wherein the alkali metal halide is selected from the group consisting of sodium chloride, potassium chloride, lithium chloride, sodium bromide, potassium bromide, lithium bromide, sodium fluoride, potassium fluoride, lithium fluoride, sodium aluminium fluoride, and potassium aluminium fluoride.

26. The process of claim 23, wherein the alkali metal halide is sodium chloride.

27. The process of claim 6 or 23, wherein the reacting of said natural flake graphite with the tungsten values occurs at a temperature of between 900°C and 1100°C.

28. The process of claim 16 or 27, wherein the temperature is approximately 1070°C.

29. The process of claim 17 or 23, wherein the cleaning includes leaching with a hydrochloric acid solution.

30. The process of claim 17 or 23, wherein the cleaning includes panning to remove any free carbon.

31. The process of claim 23, wherein the natural flake graphite is added to the alkali metal halide salt while the alkali metal halide salt is in a molten condition.

32. The process of claim 23, wherein the natural flake graphite is added to the alkali metal halide salt while the alkali metal halide salt is in a solid condition.

33. The process of any one of claims 6, 22 or 23, wherein the particle size of the natural flake graphite is generally larger than 75 micrometers.

34. The process of claim 33, wherein the particle size of the natural flake graphite is generally larger than 300 micrometers.

35. The process of any one of claims 1, 6, 13 or 23, wherein the tungsten monocarbide comprises blocky or thick bladed and equant crystals.

## Patentansprüche

1. Verfahren zur Herstellung von Wolframmonokarbid, welches die folgenden Schritte umfaßt:
(a) Vermischen eines Alkalimetallhalogenids, eines Alkalimetallsilikats und eines aufbereiteten Wolframoxiderzes unter Bildung eines Gemisches;
(b) Schmelzen dieses Gemisches unter Bildung einer den Wolframgehalt enthaltenden Halogenidsalzphase und einer die Silikate und Verunreinigungen enthaltenden Schlackenphase;
(c) Abtrennen der Salzphase von der Schlackenphase;
(d) Zugabe eines kohlenstoffhaltigen Reaktanten zu der Salzphase;
(e) Umsetzen des kohlenstoffhaltigen Reaktanten mit dem Wolframgehalt der Salzphase zur Herstellung von Wolframmonokarbidkristallen;
(f) Entfernen der Wolframmonokarbidkristalle von den restlichen Reaktionsprodukten und von jeglichem nicht umgesetzten Material,
dadurch gekennzeichnet, daß als kohlenstoffhaltiger Reaktant ein festes kohlenstoffhaltiges Material ohne Durchleiten von Gas zugegeben wird.

2. Verfahren nach Anspruch 1, dadurch gekennzeichnet,daß das Alkalimetallhalogenid Natriumchlorid, das Alkalimetallsilikat Natriummetasilikat und der kohlenstoffhaltige Reaktant natürlicher Flockengraphit ist.

3. Verfahren nach Anspruch 1, dadurch gekennzeichnet, daß der kohlenstoffhaltige Reaktant der Salzphase zugegeben wird, während sich die Salzphase in einem geschmolzenen Zustand befindet.

4. Verfahren nach Anspruch 1, dadurch gekennzeichnet, daß der kohlenstoffhaltige Reaktant der Salzphase zugegeben wird, während sich die Salzphase in einem festen Zustand befindet.

5. Verfahren nach Anspruch 1, dadurch gekennzeichnet, daß das Wolframmonokarbid in Form von Kristallen gebildet wird, die im allgemeinen größer als 15 Mikrometer sind.

6. Verfahren zur Herstellung von Wolframmonokarbid, welches die folgenden Schritte umfaßt:
(a) Vermischen eines Alkalimetallhalogenids, eines Alkalimetallsilikats und eines aufbereiteten Wolframoxiderzes unter Bildung eines Gemisches;
(b) Schmelzen dieses Gemisches unter Bildung einer den Wolframgehalt enthaltenden Salzphase und einer die Silikate und Verunreinigungen enthaltenden Schlackenphase;
(c) Abtrennen der Salzphase von der Schlackenphase,
dadurch gekennzeichnet, daß das Verfahren ferner die folgenden Schritte umfaßt:
(d) Zugabe von natürlichem Flockengraphit zu der Salzphase;
(e) Umsetzen des natürlichen Flockengraphits mit dem Wolframgehalt der Salzphase unter Bildung von Wolframmonokarbidkristallen; und
(f) Entfernen der Wolframmonokarbidkristalle von den restlichen Reaktionsprodukten und jeglichem nicht umgesetzten Material.

7. Verfahren nach Anspruch 1 oder 6, dadurch gekennzeichnet, daß das Alkalimetallsilikat Natriummetasilikat ist.

8. Verfahren nach Anspruch 1 oder 6, dadurch gekennzeichnet, daß das aufbereitete Wolframoxiderz aus der aus Wolframit und Scheelit bestehenden Gruppe ausgewählt wird.

9. Verfahren nach Anspruch 6, dadurch gekennzeichnet, daß das Alkalimetallhalogenid Natriumchlorid und das Alkalimetallsilikat Natriummetasilikat ist.

10. Verfahren nach Anspruch 6, dadurch gekennzeichnet, daß der natürliche Flockengraphit der Salzphase zugegeben wird, während sich die Salzphase in einem geschmolzenen Zustand befindet.

11. Verfahren nach Anspruch 6, dadurch gekennzeichnet, daß der natürliche Flockengraphit der Salzphase zugegeben wird, während sich die Salzphase in einem festen Zustand befindet.

12. Verfahren nach Anspruch 6, dadurch gekennzeichnet, daß das Wolframmonokarbid in Form von Kristallen gebildet wird, die im allgemeinen größer als 38 Mikrometer sind.

13. Verfahren zur Herstellung von Wolframmonokarbid, welches die folgenden Schritte umfaßt:
(a) Vermischen eines einen Wolframgehalt enthaltenden Alkalimetallhalogenidsalzes mit einem festen kohlenstoffhaltigen Reaktanten;
(b) Umsetzen dieses kohlenstoffhaltigen Reaktanten mit dem Alkalimetallhalogenidsalz ohne Durchleiten von Gas unter Bildung von Wolframmonokarbidkristallen mit einer Größe von im allgemeinen mehr als 15 Mikrometern;
(c) Entfernen der Wolframmonokarbidkristalle von den weiteren Reaktionsprodukten und nicht-umgesetztem Alkalimetallhalogenidsalz und jeglichem nicht umgesetzten Kohlenstoff aus dem festen kohlenstoff
haltigen Reaktanten.

14. Verfahren nach Anspruch 1 oder 13, dadurch gekennzeichnet, daß der kohlenstoffhaltige Reaktant aus der aus natürlichem Flockengraphit, Ruß, hochreinem natürlichem Flockengraphit und Zucker bestehenden Gruppe ausgewählt wird.

15. Verfahren nach Anspruch 13, dadurch gekennzeichnet,daß das Alkalimetallhalogenid Natriumchlorid und der kohlenstoffhaltige Reaktant natürlicher Flockengraphit ist.

16. Verfahren nach Anspruch 1 oder 13, dadurch gekennzeichnet, daß der kohlenstoffhaltige Reaktant mit dem Wolframgehalt bei einer Temperatur von zwischen 900°C und 1100°C umgesetzt wird.

17. Verfahren nach einem der Ansprüche 1, 6 oder 13, gekennzeichnet durch den weiteren Schritt der Reinigung der Wolframmonokarbidkristalle zur Herstellung von reinem Wolframmonokarbid.

18. Verfahren nach Anspruch 13, dadurch gekennzeichnet, daß der kohlenstoffhaltige Reaktant dem den Wolframgehalt enthaltenden Alkalimetallhalogenidsalz zugegeben wird, während sich das Alkalimetallhalogenidsalz in einem geschmolzenen Zustand befindet.

19. Verfahren nach Anspruch 13, dadurch gekennzeichnet, daß der kohlenstoffhaltige Reaktant dem den Wolframgehalt enthaltenden Alkalimetallhalogenidsalz zugegeben wird, während sich das Alkalimetallhalogenidsalz in einem festen Zustand befindet.

20. Verfahren nach Anspruch 1 oder 13, dadurch gekennzeichnet, daß die Teilchengröße des kohlenstoffhaltigen Reaktanten im allgemeinen größer als 75 Mikrometer ist.

21. Verfahren nach Anspruch 1 oder 13, dadurch gekennzeichnet, daß die Teilchengröße des kohlenstoffhaltigen Reaktanten im allgemeinen größer als 300 Mikrometer ist.

22. Verfahren nach Anspruch 1 oder 13, dadurch gekennzeichnet, daß der kohlenstoffhaltige Reaktant natürlicher Flockengraphit ist.

23. Verfahren zur Herstellung von Wolframmonokarbid, welches die folgenden Schritte umfaßt:
(a) Vermischen eines einen Wolframgehalt enthaltenden Alkalimetallhalogenidsalzes mit natürlichem Flockengraphit;
(b) Umsetzen des natürlichen Flockengraphits mit dem Alkalimetallhalogenidsalz unter Bildung von Wolframmonokarbidkristallen; und
(c) Reinigung der Wolframmonokarbidkristalle.

24. Verfahren nach Anspruch 23, dadurch gekennzeichnet, daß die Wolframmonokarbidkristalle im allgemeinen größer als 38 Mikrometer sind.

25. Verfahren nach einem der Ansprüche 1, 6, 13 oder 23, dadurch gekennzeichnet, daß das Alkalimetallsalz aus der aus Natriumchlorid, Kaliumchlorid, Lithiumchlorid, Natriumbromid, Kaliumbromid, Lithiumbromid, Natriumfluorid, Kaliumfluorid, Lithiumfluorid, Natriumaluminiumfluorid und Kaliumaluminiumfluorid bestehenden Gruppe ausgewählt wird.

26. Verfahren nach Anspruch 23, dadurch gekennzeichnet, daß das Alkalimetallsalz Natriumchlorid ist.

27. Verfahren nach Anspruch 6 oder 23, dadurch gekennzeichnet, daß der natürliche Flockengraphit mit dem Wolframgehalt bei einer Temperatur von zwischen 900°C und 1100°C umgesetzt wird.

28. Verfahren nach Anspruch 16 oder 27, dadurch gekennzeichnet, daß die Temperatur ungefähr 1070°C beträgt.

29. Verfahren nach Anspruch 17 oder 23, dadurch gekennzeichnet, daß die Reinigung das Auslaugen mit einer Salzsäurelösung umfaßt.

30. Verfahren nach Anspruch 17 oder 23, dadurch gekennzeichnet, daß die Reinigung das Waschen mit Sichertrog zur Entfernung von jeglichem freien Kohlenstoff umfaßt.

31. Verfahren nach Anspruch 23, dadurch gekennzeichnet, daß der natürliche Flockengraphit dem Alkalimetallhalogenidsalz zugegeben wird, während sich das Alkalimetallhalogenidsalz in einem geschmolzenen Zustand befindet.

32. Verfahren nach Anspruch 23, dadurch gekennzeichnet, daß der natürliche Flockengraphit dem Alkalimetallhalogenidsalz zugegeben wird, während sich das Alkalimetallhalogenidsalz in einem festen Zustand befindet.

33. Verfahren nach einem der Ansprüche 6, 22 oder 23, dadurch gekennzeichnet, daß die Teilchengröße des natürlichen Flockengraphits im allgemeinen größer als 75 Mikrometer ist.

34. Verfahren nach Anspruch 33, dadurch gekennzeichnet, daß die Teilchengröße des natürlichen Flockengraphits im allgemeinen größer als 300 Mikrometer ist.

35. Verfahren nach einem der Ansprüche 1, 6, 13 oder 23, dadurch gekennzeichnet, daß das Wolframmonokarbid würfelförmige oder dicke plattige und gleichkörnige Kristalle umfaßt.

## Revendications

1. Procédé de production de monocarbure de tungstène comprenant les étapes suivantes :
(a) mélanger un halogénure de métal alcalin, un silicate de métal alcalin et un minerai concentré d'oxyde de tungstène pour former un mélange ;
(b) fondre ledit mélange pour former une phase d'halogénure contenant les ressources de tungstène et une phase de laitier contenant des silicates et des impuretés ;
(c) séparer la phase d'halogénure de la phase de laitier ;
(d) ajouter un corps réagissant carboné à ladite phase d'halogénure ;
(e) faire réagir ledit corps réagissant carboné avec les ressources de tungstène contenues dans ladite phase d'halogénure pour produire des cristaux de monocarbure de tungstène ;
(f) séparer lesdits cristaux de monocarbure de tungstène des produits réactionnels restants et toute matière n'ayant pas réagi ;
caractérisé en ce qu'une matière carbonée solide est ajoutée à titre dudit corps réagissant carboné sans utiliser de barbotage.

2. Procédé de la revendication 1, dans lequel l'halogénure de métal alcalin est le chlorure de sodium, le silicate de métal alcalin est le métasilicate de sodium et le corps réagissant carboné est du graphite naturel en paillettes.

3. Procédé de la revendication 1, dans lequel le corps réagissant carboné est ajouté à la phase d'halogénure tandis que la phase d'halogénure est à l'état fondu.

4. Procédé de la revendication 1, dans lequel le corps réagissant carboné est ajouté à la phase d'halogénure tandis que la phase d'halogénure est à l'état solide.

5. Procédé de la revendication 1, dans lequel le monocarbure de tungstène est produit sous forme de cristaux qui ont une taille généralement supérieure à 15 micromètres.

6. Procédé de production de monocarbure de tungstène comprenant les étapes suivantes :
(a) mélanger un halogénure de métal alcalin, un silicate de métal alcalin et un minerai concentré d'oxyde de tungstène pour former un mélange ;
(b) fondre ledit mélange pour former une phase d'halogénure contenant les ressources de tungstène et une phase de laitier contenant des silicates et des impuretés ;
(c) séparer la phase d'halogénure de la phase de laitier ;
caractérisé en ce que le procédé comprend de plus les étapes suivantes :
(d) ajouter du graphite naturel en paillettes à ladite phase d'halogénure ;
(e) faire réagir ledit graphite naturel en paillettes avec les ressources tungstène contenues dans ladite phase d'halogénure pour produire des cristaux de monocarbure de tungstène ; et
(f) séparer lesdits cristaux de monocarbure de tungstène des produits réactionnels restants et de toute matière n'ayant pas réagi.

7. Procédé de la revendication 1 ou 6, dans lequel le silicate de métal alcalin est le métasilicate de sodium.

8. Procédé de la revendication 1 ou 6, dans lequel le minerai concentré d'oxyde de tungstène est choisi dans le groupe formé par la wolframite et la scheelite.

9. Procédé de la revendication 6, dans lequel l'halogénure de métal alcalin est le chlorure de sodium et le silicate de métal alcalin est le métasilicate de sodium.

10. Procédé de la revendication 6, dans lequel le graphite naturel en paillettes est ajouté à la phase d'halogénure tandis que la phase d'halogénure est à l'état fondu.

11. Procédé de la revendication 6, dans lequel le graphite naturel en paillettes est ajouté à la phase d'halogénure tandis que la phase d'halogénure est à l'état solide.

12. Procédé de la revendication 6, dans lequel le monocarbure de tungstène est produit sous forme de cristaux qui ont une taille généralement supérieure à 38 micromètres.

13. Procédé de production de monocarbure de tungstène comprenant les étapes suivantes :
(a) mélanger un halogénure de métal alcalin contenant des ressources de tungstène avec un corps réagissant carboné solide ;
(b) faire réagir ledit corps réagissant carboné avec ledit halogénure de métal alcalin sans utiliser de barbotage pour produire des cristaux de monocarbure de tungstène ayant une taille généralement supérieure à 15 micromètres ;
(c) isoler lesdits cristaux de monocarbure de tungstène des autres produits réactionnels et de l'halogénure de métal alcalin n'ayant pas réagi et de tout carbone n'ayant pas réagi provenant dudit corps réagissant carboné solide.

14. Procédé de la revendication 1 ou 13, dans lequel le corps réagissant carboné est choisi dans le groupe formé par un graphite naturel en paillettes, un noir de carbone, un graphite naturel en paillettes de haute pureté et le sucre.

15. Procédé de la revendication 13, dans lequel l'halogénure de métal alcalin est le chlorure de sodium et le corps réagissant carboné est du graphite naturel en paillettes.

16. Procédé de la revendication 1 ou 13, dans lequel la réaction dudit corps réagissant carboné avec les ressources de tungstène a lieu à une température comprise entre 900°C et 1100°C.

17. Procédé de l'une quelconque des revendications 1, 6 et 13, comprenant de plus l'étape consistant à nettoyer les cristaux de monocarbure de tungstène pour produire du monocarbure de tungstène pur.

18. Procédé de la revendication 13, dans lequel le corps réagissant carboné est ajouté à l'halogénure de métal alcalin contenant les ressources de tungstène tandis que l'halogénure de métal alcalin est à l'état fondu.

19. Procédé de la revendication 13, dans lequel le corps réagissant carboné est ajouté à l'halogénure de métal alcalin contenant les ressources de tungstène tandis que l'halogénure de métal alcalin est à l'état solide.

20. Procédé de la revendication 1 ou 13, dans lequel la taille des particules du corps réagissant carboné est généralement supérieure à 75 micromètres.

21. Procédé de la revendication 1 ou 13, dans lequel la taille des particules du corps réagissant carboné est généralement supérieure a 300 micromètres.

22. Procédé de la revendication 1 ou 13, dans lequel le corps réagissant carboné est du graphite naturel en paillettes.

23. Procédé de production de monocarbure de tungstène comprenant les étapes suivantes :
(a) mélanger un halogénure de métal alcalin contenant des ressources de tungstène avec du graphite naturel en paillettes ;
(b) faire réagir ledit graphite naturel en paillettes avec ledit halogénure de métal alcalin pour produire des cristaux de monocarbure de tungstène ; et
(c) nettoyer lesdits cristaux de monocarbure de tungstène.

24. Procédé de la revendication 23, dans lequel lesdits cristaux de monocarbure de tungstène ont une taille généralement supérieure à 38 micromètres.

25. Procédé de l'une quelconque des revendications 1, 6, 13 et 23, dans lequel l'halogénure de métal alcalin est choisi dans le groupe formé par le chlorure de sodium, le chlorure de potassium, le chlorure de lithium, le bromure de sodium, le bromure de potassium, le bromure de lithium, le fluorure de sodium, le fluorure de potassium, le fluorure de lithium, le fluorure de sodium et d'aluminium et le fluorure de potassium et d'aluminium.

26. Procédé de la revendication 23, dans lequel l'halogénure de métal alcalin est le chlorure de sodium.

27. Procédé de la revendication 6 ou 23, dans lequel la réaction dudit graphite naturel en paillettes avec les ressources de tungstène a lieu à une température comprise entre 900°C et 1100°C.

28. Procédé de la revendication 16 ou 27, dans lequel la température est d'environ 1070°C.

29. Procédé de la revendication 17 ou 23, dans lequel le nettoyage comprend une lixiviation avec une solution d'acide chlorhydrique.

30. Procédé de la revendication 17 ou 23, dans lequel le nettoyage comprend un lavage en cuvette pour éliminer tout carbone libre.

31. Procédé de la revendication 23, dans lequel le graphite naturel en paillettes est ajouté à l'halogénure de métal alcalin tandis que l'halogénure de métal alcalin est à l'état fondu.

32. Procédé de la revendication 23, dans lequel le graphite naturel en paillettes est ajouté à l'halogénure de métal alcalin tandis que l'halogénure de métal alcalin est à l'état solide.

33. Procédé de l'une quelconque des revendications 6, 22 et 23, dans lequel la taille des particules du graphite naturel en paillettes est généralement supérieure à 75 micromètres.

34. Procédé de la revendication 33, dans lequel la taille des particules du graphite naturel en paillettes est généralement supérieure à 300 micromètres.

35. Procédé de l'une quelconque des revendications 1, 6, 13 et 23, dans lequel le monocarbure de tungstène comprend des cristaux massifs ou à lames épaisses et ayant sensiblement le même diamètre dans toutes les directions.
